# EUROPÄISCHE PATENTSCHRIFT

(11) **EP 2 938 899 B1**
(45) Veröffentlichungstag und Bekanntmachung des Hinweises auf die Patenterteilung: **31.01.2018**
(21) Anmeldenummer: 14708241.6
(22) Anmeldetag: 05.03.2014
(51) Int. Cl.: F16D 65/00, F16D 65/08, F16D 69/04

(54) **BREMSBELAGANORDNUNG**
BRAKE LINING ASSEMBLY
ENSEMBLE DE GARNITURE DE FREIN

(30) Priorität: 08.03.2013 DE 102013203982
(43) Veröffentlichungstag der Anmeldung: 04.11.2015
(73) Patentinhaber: SAF-HOLLAND GmbH, 63856 Bessenbach (DE)
(72) Erfinder: DREWES, Olaf, 63743 Aschaffenburg (DE); KÜHR, Kai, 49074 Osnabrück (DE)
(74) Vertreter: Müller Schupfner & Partner Patent- und Rechtsanwaltspartnerschaft mbB
(86) Internationale Anmeldenummer: PCT/EP2014/054202
(87) Internationale Veröffentlichungsnummer: WO 2014/135558

(56) Entgegenhaltungen:
- EP-A1- 0 686 785
- EP-A2- 0 921 330
- DE-A1- 3 314 312
- DE-B4- 19 882 844
- US-A- 1 784 994
- US-A1- 2001 030 094

## Beschreibung

Die vorliegende Erfindung betrifft eine Bremsbelag für Trommelbremsen, sowie eine Zwischenschicht zur Anordnung zwischen einem Bremsbelag und einer Bremsbacke einer Trommelbremse.
Im Nutzfahrzeugbereich werden Trommelbremsbeläge in der Regel direkt auf die Bremsbacken genietet und es entsteht dadurch ein direkter Kontakt zwischen den Trommelbremsbelägen (Reibmaterial) und der Bremsbacke bzw. den Bremsbacken. Um ein möglichst vollständiges Aufliegen der Beläge sicherzustellen, müssen sehr enge Toleranzen eingehalten werden (z. B. durch eine mechanische Bearbeitung oder durch eine Kalibrierung), die fertigungstechnisch nur sehr aufwändig (Zeit und Kosten) und oft nicht prozesssicher hergestellt werden können.
Die US 1,784,994 A offenbart eine Bremsbelaganordnung für Trommelbremsen, umfassend eine Bremsbacke mit einer Außenkontur, einen Bremsbelag mit einer Innenkontur und eine Zwischenschicht, die einen außenseitigen Kontaktbereich und einen innenseitigen Kontaktbereich aufweist, wobei die Zwischenschicht zwischen der Bremsbacke und dem Bremsbelag angeordnet ist, und wobei die Zwischenschicht radial zur Bremsbacke gesehen derart ausgebildet ist, dass der innenseitige Kontaktbereich zumindest bereichsweise formschlüssig an die Außenkontur der Bremsbacke in einer Umfangsrichtung der Bremsbacke angepasst ist, wobei der außenseitige Kontaktbereich zumindest bereichsweise formschlüssig an die Innenkontur des Bremsbelags entlang der Umfangsrichtung angepasst ist.

Die EP 0 686 785 A1 und die US 2001/030094 A1 zeigen Bremsbelaganordnungen einer Schreibenbremse, wobei ein Bremsbelag auf einer Trägerplatte befestigt ist.

Die DE 198 82 844 B4, EP 0 921 330 A2 und DE 33 14 312 A1 zeigen Bremsbelaganordnungen, die Dämpfungsmittel aufweisen, um Resonanzschwingungen am Bremssystem zu vermeiden.

Es ist also Aufgabe der vorliegenden Erfindung, eine Bremsbelaganordnung, insbesondere für Trommelbremsen sowie eine Zwischenschicht, insbesondere zur Anordnung zwischen einem Bremsbelag und einer Bremsbacke einer Trommelbremse, bereitzustellen, mit deren Hilfe die fertigungsbedingten geometrischen Toleranzen bei Bremsbelägen und Bremsbacken aufgeweitet werden können.

Diese Aufgabe wird gelöst durch eine Bremsbelaganordnung, insbesondere für Trommelbremsen gemäß Anspruch 1, sowie durch eine Zwischenschicht, insbesondere zur Anordnung zwischen einem Bremsbelag und einer Bremsbacke einer Trommelbremse gemäß Anspruch 12. Weitere Vorteile und Merkmale der Erfindung ergeben sich aus den Unteransprüchen sowie der Beschreibung und den beigefügten Figuren.

Erfindungsgemäß umfasst eine Bremsbelaganordnung, insbesondere für Trommelbremsen, eine Bremsbacke mit einer Außenkontur, einen Bremsbelag mit einer Innenkontur, und eine Zwischenschicht, welche einen außenseitigen Kontaktbereich und einen innenseitigen Kontaktbereich aufweist, wobei die Zwischenschicht zwischen der Bremsbacke und dem Bremsbelag angeordnet ist, und wobei die Zwischenschicht radial zur Bremsbacke gesehen derart ausgebildet ist, dass der innenseitige Kontaktbereich zumindest bereichsweise formschlüssig an die Außenkontur der Bremsbacke in einer Umfangsrichtung der Bremsbacke angepasst ist, wobei der außenseitige Kontaktbereich zumindest bereichsweise formschlüssig an die Innenkontur des Bremsbelags entlang der Umfangsrichtung angepasst ist. Trommelbremsen sind Radialbremsen, bei welchen die Bremsbeläge auf eine zylindrischen Fläche, nämlich die Trommel- oder auch die Bremstrommel, wirken. Um eine Bremswirkung zu erzielen, werden die Bremsbeläge über Bremsbacken von innen gegen die umlaufende Bremstrommel gedrückt. Bei der Bremstrommel handelt es sich bevorzugt um ein zylindrisches, rotationssymmetrisches Bauteil mit einer Rotationsachse. Innerhalb der Bremstrommel sind in der Regel zwei Bremsbacken angeordnet, wobei auf jeder der Bremsbacken zumindest ein Bremsbelag festgelegt bzw. angeordnet ist. Hierzu weist der Bremsbelag bevorzugt die Innenkontur auf. Fertigungstechnisch ist es oft nur schwer bzw. nur mit sehr hohem Aufwand möglich, die Innenkontur des Bremsbelags und die Außenkontur der Bremsbacke derart exakt zu gestalten, dass eine vollkommen flächige Anordnung des Bremsbelags auf der Bremsbacke ermöglicht wird. So können beispielsweise Oberflächenrauigkeiten in den Konturen (Innenkontur des Bremsbelags und Außenkontur der Bremsbacke) vorhanden sein, oder die Radien der Außenkontur der Bremsbacke und der Innenkontur des Bremsbelags so unterschiedlich sein, dass ein flächiges Aufliegen des Bremsbelags auf der Bremsbacke verhindert ist. Mit Vorteil ist daher die Zwischenschicht zwischen dem Bremsbelag und der Bremsbacke anordenbar, wodurch eine mittelbare Anordnung des Bremsbelags auf der Bremsbacke ermöglicht ist. Vorteilhafterweise ist radial zur Rotationsachse gesehen eine Dicke der Zwischenschicht derart ausgelegt, dass der innenseitige Kontaktbereich der Zwischenschicht formschlüssig an die Außenkontur der Bremsbacke angepasst ist, während gleichzeitig der außenseitige Kontaktbereich formschlüssig an die Innenkontur des Bremsbelags angepasst ist. Mit anderen Worten ermöglicht also die Zwischenschicht eine mittelbar formschlüssige Anordnung des Bremsbelags auf der Bremsbacke. Mit Vorteil wird der Bremsbelag durch die Anordnung über die Zwischenschicht nicht verspannt eingebaut. Bremsbeläge sind in der Regel sehr steif. Wenn ein derart steifer Bremsbelag, der gegenüber der Außenkontur der Bremsbacke einen größeren oder kleineren Innendurchmesser (gemeint ist der Durchmesser der Innenkontur) aufweist, auf der Bremsbacke befestigt wird, würde dieser beim Befestigen entweder zusammengedrückt oder aufgeweitet werden. Damit wäre der Bremsbelag mit zusätzlichen Spannungen beaufschlagt, welche nun durch die Verwendung der Zwischenschicht vermeidbar sind. Mit Vorteil ist auch eine Reibfläche des Bremsbelags über die Zwischenschicht im Wesentlichen parallel zur Bremsbacke positionierbar. Mit anderen Worten ist der Bremsbelag durch die Zwischenschicht derart auf der Bremsbacke positionierbar, dass die Reibfläche des Bremsbelags und die Reibfläche der Bremstrommel bei einem Bremsvorgang über die ganze Reibfläche formschlüssig angeordnet sind. Mit anderen Worten ist die Reibfläche des Bremsbelags durch die Zwischenschicht im Wesentlichen parallel zur Außenkontur der Bremsbacke und/oder der Reibfläche der Bremstrommel positionierbar bzw. positioniert. Vorteilhafterweise kann über die Zwischenschicht die ganze Reibfläche des Bremsbelags genutzt werden, um eine maximale Bremswirkung zur erzielen. Damit ermöglicht die Zwischenschicht zum einen eine Ausgleichsfunktion zwischen dem Bremsbelag und der Bremsbacke, indem eine möglichst flächige Anordnung des Bremsbelags auf der Bremsbacke ermöglicht (mittelbar über die Zwischenschicht) wird. Zusätzlich ermöglicht die Zwischenschicht, dass der Bremsbelag zur Bremsbacke derart positioniert ist, dass dieser (beim Bremsvorgang) über die Bremsbacke möglichst plan und flächig an die Bremstrommel gedrückt wird. Eine Dicke der Zwischenschicht, die sich im Wesentlichen quer zur Rotationsachse bemisst, liegt bevorzugt in einem Bereich von etwa 0,02 - 3 mm, besonders bevorzugt in einem Bereich von etwa 0,05 - 2 mm. Ein Verhältnis der Dicke der Zwischenschicht zu einer Dicke des Bremsbelags, radial zur Rotationsachse gesehen, liegt bevorzugt in einem Bereich von etwa 0,005 - 0,2, besonders bevorzugt in einem Bereich von etwa 0,01 - 0,1. Es versteht sich, dass in Umfangsrichtung gesehen, die Dicke der Zwischenschicht nicht konstant sein muss. Um die beschriebenen Ausgleichsfunktionen bereitzustellen, wird es in der Realität so sein, dass sich die Dicke der Zwischenschicht in Umfangsrichtung zumindest bereichsweise ändert. Durch die Anordnung der Zwischenschicht können sowohl bei Bremsbacken als auch bei Bremsbelägen damit größere Fertigungstoleranzen zugelassen werden und teure und zeitintensive Fertigungsschritte entfallen (z. B. Kalibrieren, Überdrehen, Schleifen). Vorteilhafterweise verhindert die Zwischenschicht zusätzlich ein Unterrosten der Bremsbeläge, so dass auch auf ein Lackieren der Bremsbacken verzichtet werden kann. Mit Vorteil ist die Zwischenschicht auch so gestaltet, dass eine thermische Entkopplung von Bremsbelag und Bremsbacke möglich ist. Vorteilhafterweise wird hierzu ein Material für die Zwischenschicht gewählt, welches eine im Vergleich zum Material der Bremsbacke (z. B. ein Stahl oder ein Gusswerkstoff) geringere Wärmeleitfähigkeit aufweist. Mit Vorteil kann die Zwischenschicht auch einen Formschluss zwischen Bremsbelag und Bremsbacke durch eine zusätzliche Haftreibung unterstützen. Es sei darauf hingewiesen, dass es nicht die primäre Aufgabe der Zwischenschicht ist, den Bremsbelag auf der Bremsbacke zu befestigen, da weiterhin ein Form- und/oder Kraftschluss durch zusätzliche Befestigungselemente, z. B. Nieten und/oder Schrauben, realisierbar ist. Im Falle eines Belagwechsels kann die Zwischenschicht chemisch, thermisch und/oder mechanisch entfernt werden. Die Zwischenschicht kann auch als Bestandteil des Belages oder der Bremsbacke ausgebildet sein. In einer bevorzugten Ausführungsform ist die Zwischenschicht aus einem Kunststoff gefertigt.

Erfindungsgemäß weist die Zwischenschicht zumindest einen Anordnungsbereich auf, welcher für die Anordnung eines Zusatzelements ausgelegt ist. Bevorzugterweise ist der Anordnungsbereich als Ausnehmung bzw. Aussparung in der Zwischenschicht ausgebildet. Mit Vorteil ist beispielsweise ein Hohlraum vorgesehen, in welchem das Zusatzelement (oder auch mehrere) anordenbar ist. Es versteht sich, dass die Zwischenschicht auch mehr als einen Anordnungsbereich aufweisen kann. Bevorzugt ist der Anordnungsbereich in dem Bereich der Zwischenschicht angeordnet, in welchem die Dicke der Zwischenschicht groß genug ist. Der Anordnungsbereich kann so dimensioniert sein, dass das Zusatzelement das Volumen des Anordnungsbereichs nicht komplett ausfüllt. Der Anordnungsbereich kann aber auch so dimensioniert bzw. gestaltet sein, dass er genau eine Außenkontur des Zusatzelements nachformt. Mit Vorteil kann das Zusatzelement z. B. bei der Herstellung der Zwischenschicht in diese eingebettet werden. Wenn die Zwischenschicht beispielsweise gegossen wird, kann das Zusatzelement in eine entsprechende Gießform eingelegt und umgossen werden.

Zweckmäßigerweise umfasst der Anordnungsbereich zumindest einen Verbindungsabschnitt, welcher eine räumliche Verbindung mit dem Bremsbelag und/oder der Bremsbacke (oder auch anderen Fahrzeugkomponenten) bereitstellt. Der Verbindungsabschnitt bzw. mehrere Verbindungsabschnitte können auch mehrere Anordnungsbereiche untereinander verbinden. Bevorzugt ist der Verbindungsabschnitt dabei als ein Kanal oder dergleichen ausgebildet, welcher eine Verbindung mit dem an der Zwischenschicht angeordneten Bremsbelag und/oder der an der Zwischenschicht angeordneten Bremsbacke bereitstellt. Der Verbindungsabschnitt kann zum einen dazu dienen, einen Zugang zum Anordnungsbereich bereitzustellen, um beispielsweise das Zusatzelement darin anzuordnen oder auch ein weiteres Element, wie beispielsweise ein Kabel, an das Zusatzelement heranzuführen.

Erfindungsgemäß ist das Zusatzelement für einen Informations- und/oder Datenaustausch in, an und/oder von der Bremsbelaganordnung ausgelegt. Mit Vorteil ist das Zusatzelement ein Sensor und/oder ein RFID-Chip (**r**adio-**f**requency **id**entification) und/oder ein Messelement. Mit Vorteil können in die Zwischenschicht ein oder mehrere Zusatzelemente und/oder auch Sensoren oder Messstreifen integriert sein, die zur Identifizierung der Beläge genutzt werden können, oder mit welchen verschiedene Informationen zum Betriebszustand der Bremse im Allgemeinen und/oder der Beläge erfasst und übermittelt werden können (z. B. Verschleißgrenzen, Drücke, Scherkräfte, Temperaturen etc.).

Vorteilhafterweise ist das Zusatzelement über zumindest ein Verbindungselement, insbesondere ein Kabel, mit dem Bremsbelag und/oder der Bremsbacke verbunden. Über das Kabel, welches mit Vorteil in dem Verbindungsabschnitt angeordnet werden kann, können Daten, beispielsweise den Verschleißzustand oder die Temperatur des Bremsbelags betreffend, zwischen dem Bremsbelag und dem Zusatzelement ausgetauscht werden. Mit Vorteil können diese Daten über ein weiteres Verbindungselement, das von der Zwischenschicht über die Bremsbacke weiter an die Fahrzeugelektronik führt, weiterverarbeitet werden.

Mit Vorteil umfasst das Zusatzelement Empfangs- und/oder Sendemittel, welche für einen kabellosen Informations- und/oder Datenaustausch vorgesehen sind. In diesem Fall wäre ein Verbindungselement, beispielsweise in Form eines Kabels, nicht mehr notwendig. Mit Vorteil erfolgt der kabellose Informations- und/oder Datenaustausch nicht nur mit der Fahrzeugelektronik, sondern kann z. B. auch bei einem Werkstattbesuch über ein entsprechendes Lesegerät genutzt werden, beispielsweise um möglicht schnell den Verschleißzustand der Bremsbeläge zu erfassen.

Zweckmäßigerweise ist in dem zumindest einen Anordnungsbereich eine Opferanode angeordnet, die mittels des Verbindungsabschnitts eine Korrosionsschutzwirkung bereitstellt. Bevorzugt wird über den Verbindungsabschnitt zwischen der Opferanode und dem vor Korrosion zu schützenden Material, z. B. der Bremsbacke, eine elektrisch leitende Verbindung hergestellt. Mit Vorteil ist das Zusatzelement aus einem unedleren Werkstoff als beispielsweise die Bremsbacke. Damit kann das Zusatzelement als Opferanode dienen. In bevorzugten Ausführungsformen wird als Material für das Zusatzelement zum Beispiel Magnesium oder Zink verwendet. Jedoch ist jedes beliebige Material für das Zusatzelement verwendbar, solange es gegenüber dem Material bzw. den Materialien der Bremsbacke bzw. der vor Korrosion zu schützenden Bauteile als unedleres Material gelten kann. Dabei sind die Begriffe "edel" und "unedel" dahingehend definiert, dass ein Material um so edler ist, je stärker positiv sein Standardpotential ist. Das unedlere Material weist in wässriger Umgebung ein hohes Vermögen zur Elektronenabgabe auf, wobei diese Eigenschaft der bekannten elektrochemischen Spannungsreihe zu entnehmen ist. Verständlicherweise ist ein Material als Opferanode besonders gut geeignet, welches als Redoxpaar mit dem Material der Bremsbacke bzw. dem Material des vor Korrosion zu schützenden Bauteils eine besonders hohe Differenz der Standardpotentiale aufweist. Bevorzugt liegt das Standardpotential zwischen dem Zusatzelement und/oder der Bremsbacke bzw. dem vor Korrosion zu schützenden Bauteil bei etwa 0,1-1,1 V, besonders bevorzugt bei etwa 1,1-3,3 V. Je nach Materialpaarung sind auch höhere Werte durchaus erwünscht. Bevorzugterweise ist über das spezifische Gewicht der Zwischenschicht eine mechanische und/oder akustische Dämpfungswirkung bereitgestellt. Vorteilhafterweise ist dazu die Zwischenschicht aus einem Material gebildet, welches ein höheres spezifisches Gewicht aufweist als der Bremsbelag. Bevorzugt ist damit indirekt die Eigenfrequenz des Bremsbelags bzw. der Bremsbelaganordnung verkleinerbar, wodurch eine Dämpfungswirkung bereitgestellt ist. Zweckmäßigerweise ist die Zwischenschicht zumindest bereichsweise aus einem Material gebildet, welches eine progressive Federkennlinie aufweist. Vorteilhafterweise werden zum Erreichen der progressiven Federkennlinie unterschiedliche Materialien, bevorzugt zwei unterschiedliche, für die Herstellung der Zwischenschicht eingesetzt, wobei ein Material eine höhere Steifigkeit aufweist als das andere.

Vorteilhafterweise ist die Zwischenschicht zumindest aus einem ersten und einem zweiten Material gefertigt. Das erste Material ist bevorzugt weicher ausgebildet als das zweite Material und in dem Bereich der Zwischenschicht angeordnet, welcher mit dem Bremsbelag und der Bremsbacke in Kontakt steht, mit Vorteil also in dem Bereich der Innen- und Außenkontur. Mit anderen Worten ist sozusagen ein Außenbereich bzw. eine Außenschicht der Zwischenschicht aus dem ersten Material gebildet, während sozusagen ein "Kern der Zwischenschicht" aus dem zweiten Material gebildet ist. Dabei ist das erste Material bevorzugt derart weicher als die Materialien der Bremsbacke und/oder der Bremsbelags ausgebildet, dass lokale Unebenheiten bzw. Rauhigkeiten der Außenkontur der Bremsbacke bzw. der Innenkontur des Bremsbelags durch die Zwischenschicht bzw. deren erstes Material ausgeglichen werden können. Gleichzeitig können über das zweite Material der Zwischenschicht, welches für die Aufnahme und Übertragung höchster Druckkräfte ausgelegt ist, höchste Druckkräfte, die zur Erzielung einer hohen Bremskraft notwendig sind, übertragen werden. Zweckmäßigerweise ist über die Zwischenschicht auch ein Nachstellen des Bremsbelags möglich, indem z. B. zumindest ein äußerst elastisches Material verwendet wird. Alternativ bevorzugt ist zumindest ein Material derart ausgebildet, dass es zwei Zustände aufweist. Bevorzugterweise ist das Material in einem ersten Zustand weich und nachgiebig ausgebildet, um die vorher beschriebenen Ausgleichsfunktionen bereitzustellen. In einem zweiten Zustand ist das Material dann bevorzugt derart hart oder ausgehärtet ausgebildet, dass die Position des Bremsbelags im Verhältnis zur Bremsbacke im Wesentlichen nicht mehr veränderbar ist.

Mit Vorteil ist in die Zwischenschicht ein Trennelement, insbesondere ein Faden eingebracht, über welches die Zwischenschicht demontierbar ist. Bei einem Bremsbelagwechsel kann der Faden nach dem Entfernen etwaiger Nietverbindungen etc. zum Durchtrennen der Zwischenschicht genutzt werden, wodurch ein schneller Bremsbelagwechsel möglich ist. Zusätzlich kann bei einem anstehenden Belagwechsel die Zwischenschicht chemisch, thermisch und/oder mechanisch entfernt werden. Damit ist nicht nur das Entfernen von der Bremsbacke, sondern auch von dem Bremsbelag gemeint. Dies ist insbesondere aus Recycling-Gesichtspunkten von großem Vorteil.

Vorteilhafterweise weist die Zwischenschicht entlang der Umfangsrichtung eine unterschiedliche Steifigkeit auf, wodurch das Anlegen des Bremsbelags an einer Bremstrommel beeinflussbar ist. Beim Bremsen übt die sich in Umfangsrichtung drehende Bremstrommel auf den beim Bremsen anliegenden Bremsbelag ein Drehmoment aus. Abhängig von einer Abstützung bzw. Lagerung der Bremsbacke kann dieses Drehmoment beim Bremsvorgang zu einer Verstärkung der Bremswirkung führen, nämlich dann, wenn das Drehmoment in Richtung der Abstützung bzw. Lagerung der Bremsbacke wirkt (vgl. auflaufende Bremsbacke einer Trommelbremse). Der in Umfangsrichtung gesehen erste Bereich des Bremsbelags wird hierbei besonders stark belastet. Mit Vorteil kann durch eine Zwischenschicht, welche in diesem Bereich beispielsweise steifer geschaltet ist als in einem zweiten Bereich, welcher in Umfangsrichtung gesehen hinter dem ersten Bereich liegt, das Anlegen des Bremsbelags an die Bremstrommel dahingehend positiv beeinflusst werden, dass ein möglichst gleichmäßiges Anlegen und/oder eine möglichst gleichmäßige Abnutzung des Bremsbelags und/oder der Bremstrommel erreicht werden. Bevorzugt erfolgt die unterschiedliche steife Gestaltung durch die Verwendung unterschiedlich steifer Materialien.

Erfindungsgemäß ist eine Zwischenschicht, insbesondere zur Anordnung zwischen einem Bremsbelag und einer Bremsbacke einer Trommelbremse, vorgesehen, umfassend einen außenseitigen und einen innenseitigen Kontaktbereich, wobei der außenseitige Kontaktbereich zumindest bereichsweise formschlüssig mit einem Bremsbelag verbindbar ist, und wobei der innenseitige Kontaktbereich zumindest bereichsweise formschlüssig mit einer Bremsbacke verbindbar ist, wobei die Zwischenschicht zumindest einen Anordnungsbereich aufweist, welcher für die Anordnung eines Zusatzelements ausgelegt ist. Die genannten Vorteile und Merkmale der erfindungsgemäßen Bremsbelaganordnung, insbesondere für Trommelbremsen, gelten in gleicher Weise für die erfindungsgemäße Zwischenschicht.

Weitere Vorteile und Merkmale ergeben sich aus der nachfolgenden Beschreibung bevorzugter Ausführungsformen der erfindungsgemäßen Bremsbelaganordnung sowie der erfindungsgemäßen Zwischenschicht in Bezug auf die beigefügten Figuren. Einzelne Merkmale der einzelnen Ausführungsformen können dabei im Rahmen der Erfindung miteinander kombiniert werden.

Es zeigen:
- Figur 1:: eine Prinzipdarstellung einer bevorzugten Ausführungsform einer Bremsbelaganordnung;
- Figur 2a:: eine skizzenhafte Darstellung einer bevorzugten Ausführungsform einer Zwischenschicht angeordnet zwischen einem Bremsbelag und einer Bremsbacke;
- Figur 2b:: eine weitere skizzenhafte Darstellung einer weiteren bevorzugten Ausführungsform einer Zwischenschicht, angeordnet zwischen einem Bremsbelag und einer Bremsbacke.

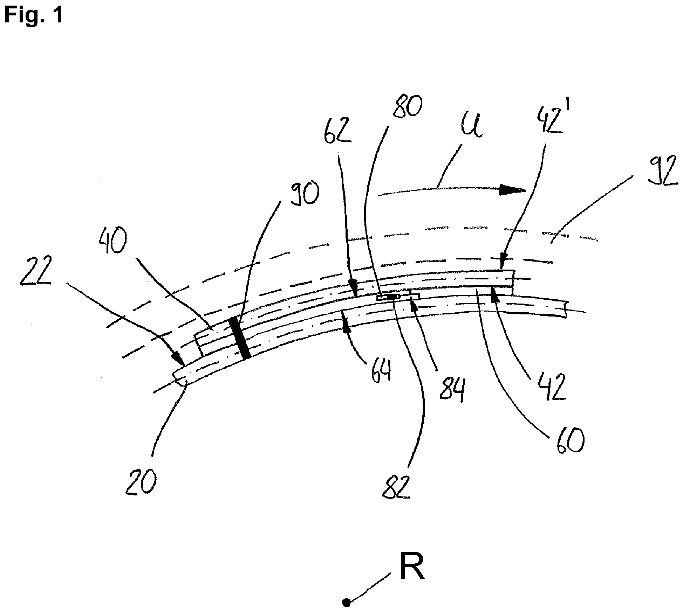

**Fig.1** zeigt eine Prinzipdarstellung einer bevorzugten Ausführungsform einer Bremsbelaganordnung, insbesondere für Trommelbremsen. Ein Bremsbelag 40 ist über eine Zwischenschicht 60 an einer Bremsbacke 20 angeordnet. Dargestellt ist eine Umfangsrichtung U entlang derer sich eine gestrichelt angedeutete Bremstrommel 92 bewegt bzw. rotiert. Die Bremsbelaganordnung weist eine gemeinsame Rotationsachse R auf. Die Zwischenschicht 60 ist über einen außenseitigen Kontaktbereich mit einer Innenkontur 42 des Bremsbelags 40 verbunden und über einen innenseitigen Kontaktbereich 64 mit einer Außenkontur 22 der Bremsbacke 20. Exemplarisch dargestellt ist ein Befestigungsmittel 90, welches der form- und/oder kraftschlüssigen Verbindung des Bremsbelags 40 mit der Bremsbacke 20 dient. Es versteht sich, dass bevorzugt mehrere Befestigungsmittel 90 vorgesehen sind. In der Zwischenschicht 60 ist ein Anordnungsbereich 80 angedeutet, in welchem ein Zusatzelement 82 angeordnet ist. Über Verbindungsabschnitte 84 ist der Anordnungsbereich 80 sowohl mit der Bremsbacke 20 als auch mit dem Bremsbelag 40 verbunden bzw. in Kontakt.

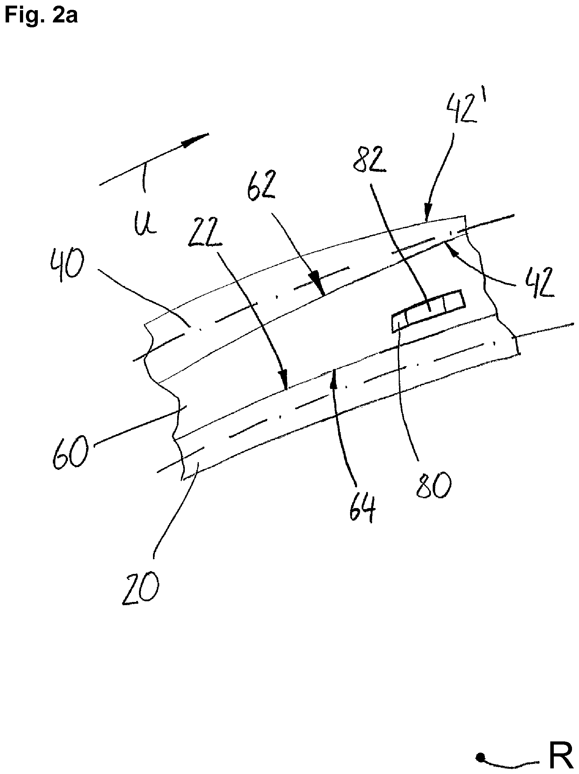

**Fig. 2a** zeigt eine skizzenhafte Darstellung einer bevorzugten Ausführungsform einer Zwischenschicht 60, angeordnet zwischen einem Bremsbelag 40 und einer Bremsbacke 20. Die Zwischenschicht 60 ist über einen außenseitigen Kontaktbereich 62 an einer Innenkontur 42 des Bremsbelags 40 angeordnet. Über einen innenseitigen Kontaktbereich 64 ist die Zwischenschicht 60 mit einer Außenkontur 22 einer Bremsbacke 20 verbunden. Deutlich zu sehen ist, dass die Innenkontur 42 des Bremsbelags 40 und eine Reibfläche 42' des Bremsbelags nicht konzentrisch zueinander ausgebildet sind. Die Anordnung der Zwischenschicht 60 zwischen der Bremsbacke 20 und dem Bremsbelag 40 ermöglicht es aber nun, dass die Reibfläche 42' des Bremsbelags und die Außenkontur 22 der Bremsbacke parallel zueinander positioniert sind. Die Funktionsweise der Zwischenschicht 60 wäre ähnlich, wenn z. B. die Krümmung der Innenkontur 42 größer oder kleiner wäre als die Krümmung der Außenkontur 22 der Bremsbacke 20. Dieser Unterschied könnte durch die Zwischenschicht 60 derart ausgeglichen werden, dass die Reibfläche 42' des Bremsbelags 40 im Wesentlichen parallel zur Bremsbacke 20 bzw. zur deren Außenkontur ausgerichtet ist.

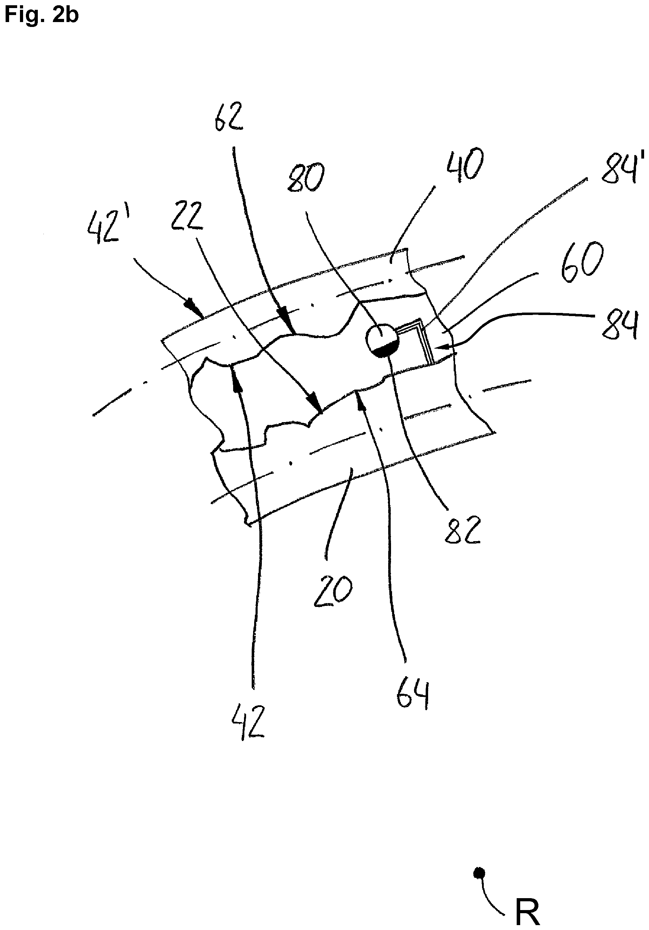

**Fig. 2b** zeigt eine weitere skizzenhafte Darstellung einer bevorzugten Ausführungsform einer Zwischenschicht 60, angeordnet zwischen einem Bremsbelag 40 und einer Bremsbacke 20. Eine Innenkontur 42 des Bremsbelags 40 sowie eine Außenkontur 22 der Bremsbacke 20 sind rau bzw. zerklüftet dargestellt. Diese Rauigkeiten bzw. Zerklüftungen können mit Vorteil durch die Zwischenschicht 60 ausgeglichen werden. Ein Anordnungsbereich 80 ist im Wesentlichen als runde Kugel ausgebildet, in welcher ein Zusatzelement 82 angeordnet ist. Über einen Verbindungsabschnitt 84, in welchem ein Verbindungselement 84' angeordnet ist, ist der Anordnungsbereich 80 mit der Bremsbacke 20 verbunden.

### Bezugszeichenliste

- 20: Bremsbacke
- 22: Außenkontur
- 40: Bremsbelag
- 42: Innenkontur
- 42': Reibfläche
- 60: Zwischenschicht
- 62: außenseitiger Kontaktbereich
- 64: innenseitiger Kontaktbereich
- 80: Anordnungsbereich
- 82: Zusatzelement
- 84: Verbindungsabschnitt
- 84': Verbindungselement
- 90: Befestigungsmittel
- 92: Bremstrommel
- R: Rotationsachse
- U: Umfangsrichtung

## Patentansprüche

1. Bremsbelaganordnung für Trommelbremsen, umfassend eine Bremsbacke (20) mit einer Außenkontur (22), einen Bremsbelag (40) mit einer Innenkontur (42), und
eine Zwischenschicht (60), welche einen außenseitigen Kontaktbereich (62) und einen innenseitigen Kontaktbereich (64) aufweist,
wobei die Zwischenschicht (60) zwischen der Bremsbacke (20) und dem Bremsbelag (40) angeordnet ist, und
wobei die Zwischenschicht (60) radial zur Bremsbacke (20) gesehen derart ausgebildet ist, dass der innenseitige Kontaktbereich (64) zumindest bereichsweise formschlüssig an die Außenkontur (22) der Bremsbacke (20) in einer Umfangsrichtung (U) der Bremsbacke (20) angepasst ist,
wobei der außenseitige Kontaktbereich (62) zumindest bereichsweise formschlüssig an die Innenkontur (42) des Bremsbelags (40) entlang der Umfangsrichtung (U) angepasst ist,
**dadurch gekennzeichnet, dass** die Zwischenschicht (60) zumindest einen Anordnungsbereich (80) aufweist, welcher für die Anordnung eines Zusatzelements (82) ausgelegt ist, wobei das Zusatzelement (82) für einen Informations- und/oder Datenaustausch in, an und/oder von der Bremsbelaganordnung ausgelegt ist.

2. Bremsbelaganordnung nach Anspruch 1,
wobei der Anordnungsbereich (80) zumindest einen Verbindungsabschnitt (84) umfasst, welcher eine räumliche Verbindung mit dem Bremsbelag (40) und/oder der Bremsbacke (20) bereitstellt.

3. Bremsbelaganordnung nach einem der vorhergehenden Ansprüche, wobei das Zusatzelement (82) über zumindest ein Verbindungselement (84'), insbesondere ein Kabel, mit dem Bremsbelag (40) und/oder der Bremsbacke (20) verbunden ist.

4. Bremsbelaganordnung nach einem der vorhergehenden Ansprüche, wobei in dem zumindest einen Anordnungsbereich (80) eine Opferanode angeordnet ist, die mittels des Verbindungsabschnitts (84) eine Korrosionsschutzwirkung bereitstellt.

5. Bremsbelaganordnung nach einem der vorhergehenden Ansprüche, wobei über das spezifische Gewicht der Zwischenschicht (60) eine mechanische und/oder akustische Dämpfungswirkung bereitgestellt ist.

6. Bremsbelaganordnung nach einem der vorhergehenden Ansprüche, wobei die Zwischenschicht (60) zumindest aus einem ersten und einem zweiten Material gefertigt ist.

7. Bremsbelaganordnung nach einem der vorhergehenden Ansprüche, wobei in die Zwischenschicht (60) ein Trennelement (66), eingebracht ist, über welches die Zwischenschicht (60) demontierbar ist, und wobei das Trennelement (66) vorzugsweise ein Faden ist.

8. Bremsbelaganordnung nach einem der vorhergehenden Ansprüche, wobei die Zwischenschicht (60) entlang der Umfangsrichtung (U) eine unterschiedliche Steifigkeit aufweist, wodurch das Anlegen des Bremsbelags (40) an einer Bremstrommel (92) beeinflussbar ist.

9. Bremsbelaganordnung nach einem der vorhergehenden Ansprüche, wobei die Zwischenschicht (60) radial zu einer Rotationsachse (R) gesehen eine Dicke aufweist, welche derart ausgelegt ist, dass die Reibfläche (42') des Bremsbelags (40) im Wesentlichen parallel zur Außenkontur (22) der Bremsbacke (20) und/oder einer Reibfläche einer Bremstrommel positionierbar oder positioniert ist.

10. Zwischenschicht zur Anordnung zwischen einem Bremsbelag (40) und einer Bremsbacke (20) einer Trommelbremse,
umfassend einen außenseitigen (62) und einen innenseitigen Kontaktbereich (62),
wobei der außenseitige Kontaktbereich (62) zumindest bereichsweise formschlüssig mit einem Bremsbelag (40) verbindbar ist, und
wobei der innenseitige Kontaktbereich (64) zumindest bereichsweise formschlüssig mit einer Bremsbacke (20) verbindbar ist,
wobei die Zwischenschicht (20) zumindest einen Anordnungsbereich (80) aufweist, welcher für die Anordnung eines Zusatzelements (82) ausgelegt ist.

## Claims

1. Brake lining assembly for drum brakes,
comprising a brake shoe (20) having an outer contour (22), a brake lining (40) having an inner contour (42), and
an intermediate layer (60) having an outer contact region (62) and an inner contact region (64),
wherein the intermediate layer (60) is arranged between the brake shoe (20) and the brake lining (40), and
wherein the intermediate layer (60) is formed, as viewed radially with respect to the brake shoe (20), in such a manner that
the inner contact region (64) at least in a certain area is matched in a form-fitting manner to the outer contour (22) of the brake shoe (20) in a circumferential direction (U) of the brake shoe (20),
wherein the outer contact region (62) at least in a certain area is matched in a form-fitting manner to the inner contour (42) of the brake lining (40) along the circumferential direction (U),
**characterized in that**,
the intermediate layer (60) has at least one arrangement region (80) adapted for arranging an additional element (82),
wherein the additional element (82) is adapted for an exchange of information and/or data in, on and/or from the brake lining assembly.

2. The brake lining assembly according to claim 1,
wherein the arrangement region (80) comprises at least one connection portion (84) providing a spatial connection with the brake lining (40) and/or the brake shoe (20).

3. The brake lining assembly of any one of the preceding claims,
wherein the additional element (82) is connected to the brake lining (40) and/or the brake shoe (20) by means of at least one connection element (84'), particularly a cable.

4. The brake lining assembly of any one of the preceding claims,
wherein in the at least one arrangement region (80) a sacrificial anode is arranged, which provides a corrosion protection effect by means of the connection portion (84).

5. The brake lining assembly of any one of the preceding claims,
wherein a mechanical and/or acoustic dampening effect is provided by means of the specific weight of the intermediate layer (60).

6. The brake lining assembly of any one of the preceding claims,
wherein the intermediate layer (60) is manufactured from at least a first and a second material.

7. The brake lining assembly of any one of the preceding claims,
wherein a separating element (66), particularly a thread, is introduced into the intermediate layer (60), by means of which the intermediate layer (60) can be dismounted.

8. The brake lining assembly of any one of the preceding claims,
wherein the intermediate layer (60) along the circumferential direction (U) has a varying stiffness such that the application of the brake lining (40) against a brake drum (90) may be influenced.

9. The brake lining assembly of any one of the preceding claims,
wherein the intermediate layer (60), as viewed radially with respect to an axis of rotation (R), has a thickness, which is adapted such that the friction surface (42') of the brake lining (40) can be or is positioned essentially parallel to the outer contour (22) of the brake shoe (20) and/or a friction surface of a brake drum.

10. Intermediate layer, particularly for being arranged between a brake lining (40) and a brake shoe (20) of a drum brake,
comprising an outer contact region (62) and an inner contact region (64), wherein the outer contact region (62) can be connected to a brake lining (40) at least in a certain area, and
wherein the inner contact region (64) at least in a certain area can be connected to a brake shoe (20) in a form-fitting manner,
wherein the intermediate layer (20) has at least one arrangement region (80), which is adapted for arranging an additional element (82).

## Revendications

1. Ensemble de garniture de frein pour des freins à tambour,
comportant une mâchoire de frein (20) ayant un contour extérieur (22), une garniture de frein (40) ayant un contour intérieur (42), et une couche intermédiaire (60) qui présente une zone de contact (62) côté extérieur et une zone de contact (64) côté intérieur,
dans lequel
la couche intermédiaire (60) est agencée entre la mâchoire de frein (20) et la garniture de frein (40), et
la couche intermédiaire (60), vue radialement par rapport à la mâchoire de frein (20), est réalisée de telle sorte que la zone de contact (64) côté intérieur est adaptée au moins localement en coopération de formes au contour extérieur (22) de la mâchoire de frein (20) dans une direction périphérique (U) de la mâchoire de frein (20),
la zone de contact (62) côté extérieur est adaptée au moins localement en coopération de formes au contour intérieur (42) de la garniture de frein (40) le long de la direction périphérique (U),
**caractérisé en ce que**
la couche intermédiaire (60) présente au moins une zone d'agencement (80) qui est conçue pour agencer un élément supplémentaire (82), l'élément supplémentaire (82) étant conçu pour une échange d'informations et/ou de données dans, sur et/ou depuis l'ensemble de garniture de frein.

2. Ensemble de garniture de frein selon la revendication 1,
dans lequel la zone d'agencement (80) comprend au moins une portion de liaison (84) qui assure une liaison dans l'espace avec la garniture de frein (40) et/ou avec la mâchoire de frein (20).

3. Ensemble de garniture de frein selon l'une des revendications précédentes,
dans lequel l'élément supplémentaire (82) est relié à la garniture de frein (40) et/ou à la mâchoire de frein (20) par au moins un élément de liaison (84'), en particulier par un câble.

4. Ensemble de garniture de frein selon l'une des revendications précédentes,
dans lequel une anode sacrificielle est agencée dans ladite au moins une zone d'agencement (80), qui assure un effet de protection anticorrosion au moyen de la portion de liaison (84).

5. Ensemble de garniture de frein selon l'une des revendications précédentes,
dans lequel un effet d'atténuation mécanique et/ou acoustique est assuré par le poids spécifique de la couche intermédiaire (60).

6. Ensemble de garniture de frein selon l'une des revendications précédentes,
dans lequel la couche intermédiaire (60) est fabriquée au moins d'un premier et d'un second matériau.

7. Ensemble de garniture de frein selon l'une des revendications précédentes,
dans lequel un élément de séparation (66) est intégré dans la couche intermédiaire (60), par lequel la couche intermédiaire (60) peut être démontée, et l'élément de séparation (66) est préférence un fil.

8. Ensemble de garniture de frein selon l'une des revendications précédentes,
dans lequel la couche intermédiaire (60) présente différentes rigidités le long de la direction périphérique (U), ce qui permet d'influencer l'appui de la garniture de frein (40) contre un tambour de frein (92).

9. Ensemble de garniture de frein selon l'une des revendications précédentes,
dans lequel la couche intermédiaire (60), vue radialement par rapport à un axe de rotation (R), présente une épaisseur conçue de telle sorte que la surface de friction (42') de la garniture de frein (40) est positionnée ou susceptible d'être positionnée sensiblement parallèlement au contour extérieur (22) de la mâchoire de frein (20) et/ou d'une surface de friction d'un tambour de frein.

10. Couche intermédiaire destinée à l'agencement entre une garniture de frein (40) et une mâchoire de frein (20) d'un frein à tambour,
comportant une zone de contact (62) côté extérieur et une zone de contact (62) côté intérieur,
dans laquelle la zone de contact (62) côté extérieur est susceptible d'être reliée au moins localement en coopération de formes à une garniture de frein (40), et
la zone de contact (64) côté intérieur est susceptible d'être reliée au moins localement en coopération de formes à une mâchoire de frein (20),
et la couche intermédiaire (20) présente au moins une zone d'agencement (80) qui est conçue pour l'agencement d'un élément supplémentaire (82).
